# EUROPÄISCHE PATENTANMELDUNG

(11) **EP 2 511 447 A1**
(43) Veröffentlichungstag der Anmeldung: **17.10.2012**
(21) Anmeldenummer: 11162514.1
(22) Anmeldetag: 14.04.2011
(51) Int. Cl.: E04G 17/065

(54) **Verankerungselement für Betonierungs-Schaltafel und Spannstab**

(71) Anmelder: Hofin GmbH, 39031 Bruneck (IT)
(72) Erfinder: Die Erfindernennung liegt noch nicht vor
(74) Vertreter: Klunker . Schmitt-Nilson . Hirsch

(57) **Zusammenfassung**

Verankerungselement (20), das für ein Zusammenwirken mit einer Betonierungs-Schaltafel und einem Spannstab zum Zusammenhalten von zwei beabstandeten Betonierungs-Schaltafeln geeignet ist,
dadurch gekennzeichnet,
dass das Verankerungselement ein Basisteil (22) und ein an dem Basisteil rotierbar gehaltertes Schraubteil (24) aufweist;
dass das Basisteil einen plattenartigen Bereich mit einer Anlagefläche zum Anlegen an die Rückseite(n) einer Betonierungs-Schaltafel oder mehrerer benachbarter Betonierungs-Schaltafeln besitzt;
dass das Basisteil mindestens ein Halterungselement (26) besitzt, mit dessen Hilfe das Verankerungselement rückseitig an einer Betonierungs-Schaltafel gehaltert werden kann;
dass das Schraubteil einen Zentralkanal zur Aufnahme einer Teillänge des betreffenden Spannstabs aufweist und der Zentralkanal mindestens auf einem Teil seiner Länge gewindeartig für einen Gewindeeingriff mit dem Spannstab ausgebildet ist;
und dass an dem Basisteil ein Sperrelement (28) angeordnet ist, welches zwischen einer Sperrstellung, bei der das Schraubteil mindestens in einer Rotationsrichtung in seiner Rotationsbewegung relativ zu dem Basisteil begrenzt ist, und einer Freigabestellung bewegbar ist, bei der das Schraubteil für seine Rotationsbewegung relativ zu dem Basisteil frei ist.

## Beschreibung

Gegenstand der Erfindung ist ein Verankerungselement das für ein Zusammenwirken mit einer Betonierungs-Schaltafel und einem Spannstab zum Zusammenhalten von zwei beabstandeten Betonierungs-Schaltafeln geeignet ist,
dadurch gekennzeichnet,
dass das Verankerungselement ein Basisteil und ein an dem Basisteil rotierbar gehaltertes Schraubteil aufweist;
dass das Basisteil einen plattenartigen Bereich mit einer Anlagefläche zum Anlegen an die Rückseite(n) einer Betonierungs-Schaltafel oder mehrerer benachbarter Betonierungs-Schaltafeln besitzt;
dass das Basisteil mindestens ein Halterungselement besitzt, mit dessen Hilfe das Verankerungselement rückseitig an einer Betonierungs-Schaltafel gehaltert werden kann;
dass das Schraubteil einen Zentralkanal zur Aufnahme einer Teillänge des betreffenden Spannstabs aufweist und der Zentralkanal mindestens auf einem Teil seiner Länge gewindeartig für einen Gewindeeingriff mit dem Spannstab ausgebildet ist;
und dass an dem Basisteil ein Sperrelement angeordnet ist, welches zwischen einer Sperrstellung, bei der das Schraubteil mindestens in einer Rotationsrichtung in seiner Rotationsbewegung relativ zu dem Basisteil begrenzt ist, und einer Freigabestellung bewegbar ist, bei der das Schraubteil für seine Rotationsbewegung relativ zu dem Basisteil frei ist.

Wenn man eine Betonwand erzeugen will, werden typischerweise auf einer Seite der zu erzeugenden Wand eine Reihe von vertikalen Schaltafeln nebeneinander sowie auf der anderen Seite der zu erzeugenden Betonwand eine weitere Reihe von vertikalen Schaltafeln nebeneinander aufgestellt. Der gegenseitige Abstand der Schaltafelreihen entspricht der Dicke der zu erzeugenden Betonwand. Dieser Abstand wird durch rohrförmige Abstandshülsen aus Kunststoff, die zu mehreren pro Paar von Schaltafeln vorhanden sind, festgelegt. Durch die Abstandshülsen wird jeweils ein mit Gewinde versehener Spannstab gesteckt. Bisher wurde auf den Rückseiten der beteiligten Schaltafeln jeweils eine Ankerplatte, die eine größere zentrale Öffnung als der Außendurchmesser des Spannstabs hatte, aufgesteckt; dann wurde auf jeder Seite eine Flügelmutter auf den Spannstab aufgeschraubt, bis die zwei beteiligten Schaltafeln gegen die betreffende Abstandshülse gezogen waren. Auf diese Weise ist nicht nur der gewünschte Abstand der zwei beteiligten Schaltafeln fixiert, sondern sind die zwei Schaltafeln auch gegen Auseinanderbewegen unter dem Druck des fließfähigen Betons beim Gießen der Wand gesichert.

Bisher erfolgt das beschriebene Fertig-Vorbereiten der Wandschalung derart, dass - pro betrachtete Abstandshülse/Spannstab -eine erste Person von der Rückseite einer ersten Schaltafel her den Spannstab durch die Abstandshülse hindurch einfädelt, bis er an der Rückseite der zweiten Schaltafel herausschaut. Eine zweite Person, die sich an der Rückseite der zweiten Schalung befindet, zieht dort eine Ankerplatte auf, bringt eine Flügelmutter an und hält diese mit seinen Händen gegen Verdrehen fest. Dann zieht die erste Person, die sich auf der Rückseite der ersten Schaltafel befindet, eine Ankerplatte auf, schraubt eine Flügelmutter auf und dreht die Flügelmutter so weit, bis die zwei beteiligten Schaltafeln an dieser Stelle zusammengespannt sind. Dieser Ablauf ist für jede Spannhülse/Spannstab der ganzen Reihe der Schaltafelpaare erforderlich. Somit bedeutet dieses Fertig-Vorbereiten der kompletten Wandschalung für die zu erstellende Betonwand einen erheblichen Aufwand an Mannstunden.

Der Erfindung liegt die Aufgabe zugrunde, ein Verankerungselement, das für ein Zusammenwirken mit einer Betonierungs-Schaltafel und einem Spannstab zum Zusammenhalten von zwei beabstandeten Betonierungs-Schaltafeln geeignet ist, verfügbar zu machen, welches die Anbringung des betreffenden Spannstabs von der Rückseite nur einer der zwei beteiligten Schaltafeln aus ermöglicht.

Diese Aufgabe wird durch das im Eingangsabsatz der vorliegenden Anmeldung spezifizierte Verankerungselement gelöst.

Das Basisteil des Verankerungselements übernimmt die Funktion, die im Stand der Technik durch eine der Ankerplatten erfüllt worden ist, und noch weitere Funktionen, wie sich aus der nachfolgenden Beschreibung ergeben wird. Auf Grund des Halterungselements bzw. der Halterungselemente an dem Basisteil kann das Verankerungselement, z. B. beim Aufstellen der Reihe der ersten Schaltafeln und damit zeitlich deutlich vor dem Einfädeln des Spannstabs, bequem rückseitig an einer Schaltafel angebracht werden. Das Schraubteil erfüllt die Funktion einer der weiter oben beschriebenen Flügelmuttern im Stand der Technik, hat aber mindestens eine weitere Funktion, siehe nächster Satz. Das Schraubteil wirkt nämlich zusammen mit dem Sperrelement, wenn sich dieses in seiner Sperrstellung befindet. In der Sperrstellung des Sperrelements kann - je nach konstruktiver Ausführung von Schraubteil und Sperrelement - das Schraubteil entweder überhaupt keine signifikante Rotationsbewegung relativ zu dem Basisteil ausführen oder maximal eine begrenzte Rotationsbewegung (typischerweise maximal etwas weniger als 180°) relativ zu dem Basisteil ausführen. Gegen weiter gehenden Rotationsbewegungen ist das Basisteil gesperrt. Das Basisteil kann aus Metall sein, z. B. in Schweißkonstruktion oder in Gusskonstruktion.

Eine mögliche Arbeitsweise mit dem erfindungsgemäßen Verankerungselement ist - pro Abstandshülse/Spannstab/Verankerungselement - wie folgt:

Eine Person bringt - typischerweise zu einem Zeitpunkt, der deutlich vor dem Zeitpunkt des Einfädelns des Spannstabs liegt -das Verankerungselement, einschließlich des an dem Basisteil des Verankerungselement rotierbar gehalterten Schraubteils, unter Nutzung des Halterungselements bzw. der Halterungselemente rückseitig an einer ersten Schaltafel an. Typischerweise zur gleichen Zeit bringt die Person das Sperrelement in die Sperrstellung. Wenn die gegenüberliegende, zweite Schaltafel aufgestellt wird oder aufgestellt worden ist, wird der Spannstab von der Rückseite der zweiten Schaltafel her durch eine Öffnung in der zweiten Schaltafel gesteckt. Auf das an der Vorderseite der zweiten Schaltafel herauskommende Ende wird eine Abstandshülse gesteckt. Dann wird der Spannstab weiter nach vorn in eine korrespondierende Öffnung in der ersten Schaltafel gesteckt. Von der Rückseite der zweiten Schaltafel her wird der Spannstab um seine Achse gedreht, so dass er sich in das gegen Rotationsbewegung gesperrte Schraubteil an der Rückseite der erste Schaltafel einschraubt. Sobald eine genügende Länge des Spannstabs in das Schraubteil eingeschraubt ist, bringt die Person, die sich an der Rückseite der zweiten Schaltafel befindet, dort ein weiteres Verankerungselement auf den Spannstab auf und dreht dessen Schraubteil in gewindeartigen Eingriff mit dem Spannstab. Die Schraubrotation dieses zweiten Schraubteils wird so lange fortgesetzt, bis die zwei beteiligten Schaltafeln an der betreffenden Stelle fest zusammengespannt sind. Alternativ könnten statt des weiteren erfindungsgemäßen Verankerungselements eine konventionelle Ankerplatte und eine konventionelle Flügelmutter eingesetzt werden.

Das erfindungsgemäße Verankerungselement ermöglicht es somit, alle Arbeitsschritte - außer der anfänglichen Anbringung des Basisteils des Verankerungselements rückseitig an der ersten Schaltafel - nur von der Rückseite der zweiten Schaltafel her durchzuführen. Es wird nicht die Mitwirkung einer weiteren Person an der Rückseite der ersten Schaltafel benötigt. Mannstunden und damit Kosten in erheblicher Höhe werden eingespart.

Bei einer spezielleren Ausbildung des erfindungsgemäßen Verankerungselements ist das Schraubteil eine Flügelmutter. Flügelmuttern lassen sich, z. B. beim Entfernen des Verankerungselements und Freigabestellung des Sperrelements nach dem Betonieren, bequem drehen, sei es von Hand oder sei es am Anfang mit Hilfe von Hammerschlägen. Es ist möglich, andere Arten von Muttern als Schraubteil vorzusehen.

Bei einer spezielleren Ausbildung des erfindungsgemäßen Verankerungselements besitzt das Basisteil mindestens einen gegenüber der Anlagefläche vorstehenden Vorsprung, der derart positioniert und ausgebildet ist, dass er im Schaltafel-Anlagezustand des Verankerungselements an der Betonierungs-Schaltafel bzw. an den mehreren benachbarten Betonierungs-Schaltafeln dazu beiträgt, dass das Verankerungselement eine definierte Positionierung an der Rückseite der Betonierungs-Schaltafel bzw. der benachbarten Betonierungs-Schaltafeln einnimmt. Die Ausbildung kann so sein, dass mittels des Vorsprungs bzw. der Vorsprünge zum Einen das Basisteil in definierter Positionierung rückseitig an der betreffenden Schaltafel gehaltert wird und auch in dieser Positionierung bleibt, und dass sich zum Anderen das Basisteil nicht mitdreht, wenn der Spannstab eingeschraubt wird. Es wird jedoch betont, dass es auch andere technische Möglichkeiten gibt, wie man die genannten Funktionen mindestens teilweise erzielen kann. Insbesondere wird die Ausbildung des Halterungselements bzw. der Halterungselemente derart, dass das Basisteil gegen Mitdrehen gesichert ist, erwähnt. Die in diesem Absatz angesprochene, speziellere Ausbildung kann bei dem Lastaufnahmeelement gemäß Eingangsabsatz der Anmeldung, aber auch bei einer oder zugleich mehreren der vorstehend abgehandelten, spezielleren Ausbildungen, verwirklicht sein.

Hinsichtlich des im vorhergehenden Absatz angesprochenen Vorsprungs bzw. Vorsprünge wird ausgeführt, dass die Ausführung so sein kann, dass mindestens sechs Vorsprünge vorhanden sind, wobei vier Vorsprünge im Wesentlichen entsprechend den Eckpunkten eines Rechtecks positioniert sind und zwei Vorsprünge im mittleren Bereich der längeren Seiten dieses Rechtecks positioniert sind. Dies ergibt eine besonders gute, sichere, leicht handhabbare Positionierung des Verankerungselements. Durch die sechs Vorsprünge sind auf der Anlagefläche zwei sich rechtwinklig kreuzende, rechts und links begrenzte Anlagebahnen geschaffen, die gut dafür geeignet sind, längliche Bereiche an der Rückseite des oder der betreffenden Schaltafeln in sich aufzunehmen, die links und rechts Anlageränder bieten.

Bei einer spezielleren Ausbildung ist als das mindestens eine Halterungselement entweder eine federnde Klammer oder ein Paar gegenüberliegender, federnder Klammern vorhanden, das bzw. die derart positioniert ist bzw. sind, dass sie für den gehalterten Zustand des Verankerungselements hinter einem Gegenbereich bzw. hinter Gegenbereichen an der betreffenden Betonierungs-Schaltafel einschnappen kann bzw. können. Eine federnde Klammer oder ein Paar gegenüberliegender, federnder Klammern, haben den Vorteil, dass sich die Anbringung des Basisteils und damit des Verankerungselements insgesamt an der betreffenden Schaltafel durch einfaches Andrücken und Einschnappen besonders unkompliziert gestaltet. Da die von den Klammern zu liefernden Halterungskräfte relativ gering sind, sind Klammern bzw. aus federnden Metallstreifen gut einsetzbar. Diese speziellere Ausbildung kann bei dem Lastaufnahmeelement gemäß Eingangsabsatz der Anmeldung, aber auch bei einer oder zugleich mehreren der vorstehend abgehandelten, spezielleren Ausbildungen, verwirklicht sein.

Bei einer spezielleren Ausbildung ist das Sperrelement ein relativ zu dem Basisteil schwenkbar gelagerter Hebel mit einem Sperrbereich, gegen den in der Sperrstellung des Hebels das Schraubteil anschlägt. Ein derartiger Hebel wirkt auf einfachste Weise mit z. B. der als Schraubteil vorgesehenen Flügelmutter zusammen, wobei abhängig von der Anzahl der Flügel an der Flügelmutter der Leer-Rotationswinkel des Schraubteils, ehe es für weiter gehende Rotation gesperrt ist, mehr oder weniger groß ist. Bei einem Schraubteil, welches nicht eine Flügelmutter ist, kann man z. B. radiale Nuten in dem Schraubteil vorsehen, wobei der Sperrbereich des Hebels in einer jeweils passende dieser Nuten eingebracht werden kann, um so die Sperrstellung des Hebels zu erreichen. Diese speziellere Ausbildung kann bei dem Lastaufnahmeelement gemäß Eingangsabsatz der Anmeldung, aber auch bei einer oder zugleich mehreren der vorstehend abgehandelten, spezielleren Ausbildungen, verwirklicht sein.

Bei einer spezielleren Ausbildung des erfindungsgemäßen Verankerungselements ist an dem Verankerungselement ein Begrenzungselement vorhanden, welches zwischen einer Begrenzungsstellung, bei der ein Spannstab maximal für eine festgelegte Schraubbewegungsstrecke mit dem Schraubteil verschraubt werden kann, und einer Freigabestellung bewegbar ist, bei der der Spannstab für eine unbegrenzte Schraubbewegungsstrecke relativ zu dem Schraubteil frei ist. Ein derartiges Begrenzungselement kann von der Person, die das Verankerungselement rückseitig an der ersten Schaltafel anbringt, in die Begrenzungsstellung gebracht werden. Infolge dessen ist die Person, welche von der Rückseite der zweiten Schaltafel her den Spannstab in das Schraubteil einschraubt, nicht mehr auf ihr Gefühl angewiesen, ab wann der Schraubeingriff zwischen dem Spannstab und dem Schraubteil beginnt und für wie viele Umdrehungen der Spannstab anschließend noch weitergedreht wird. Diese Person kann vielmehr, ohne besonders aufmerksam sein zu müssen, den Spannstab so weit einschrauben, bis es nicht mehr weiter geht. Diese speziellere Ausbildung kann bei dem Lastaufnahmeelement gemäß Eingangsabsatz der Anmeldung, aber auch bei einer oder zugleich mehreren der vorstehend abgehandelten, spezielleren Ausbildungen, verwirklicht sein.

Das im vorhergehenden Absatz angesprochene Begrenzungselement kann einen Begrenzungsbereich aufweisen, der in der Begrenzungsstellung des Begrenzungselements entweder den Zentralkanal des Schraubteils auf einer Teillänge blockiert oder über dem Ende, welches von der Anlagefläche des Verankerungselements abgewandt ist, des Zentralkanals des Schraubteils eine Sperre bildet. Das Begrenzungselement kann ein schwenkbar an dem Schraubteil gelagerter Bügel sein, aber es gibt eine Reihe anderer Ausführungsmöglichkeiten, z. B. ein Querstift oder eine schwenkbare Klaue an dem Schraubteil, der bzw. die zur Erreichung der Begrenzungsstellung mit einem Begrenzungsbereich in den, z. B. Endbereich, des Zentralkanals des Schraubteils eingebracht werden kann.

Eine günstige Möglichkeit zum rotierbaren Haltern des Schraubteils an dem Basisteil ist, dass das Schraubteil mit einem Teil seiner axialen Länge durch eine kreisrunde Öffnung im Basisteil führt und gegen Bewegung in einer ersten Axialrichtung durch eine Schulter am Schraubteil gesperrt ist. Zur Sperrung einer Bewegung in der anderen Axialrichtung kann an demjenigen Bereich des Schraubteils, der aus der Öffnung im Basisteil herausragt, eine Scheibe oder ein Ring genügend großen Durchmessers angebracht sein, so dass das Schraubteil nicht aus der Öffnung des Basisteils herausgezogen werden kann.

Die Erfindung und speziellere Ausbildungen der Erfindung werden nachfolgend anhand eines zeichnerisch dargestellten Ausführungsbeispiels näher erläutert. Es zeigt:
- Fig. 1: ein Verankerungselement im rückseitig an einer Betonierungs-Schaltafel gehalterten Zustand, und zwar in perspektivischer Darstellung;
- Fig. 2: einen Ausschnitt aus Fig. 1 in größerem Maßstab;
- Fig. 3: das Verankerungselement von Fig. 1 und Fig. 2, ebenfalls in perspektivi-scher Darstellung, jetzt allerdings im Zustand vor Anbringung an einer Betonierungs-Schaltafel und gesehen auf die Anlageseite des Basisteils des Verankerungselements, die bei der Blickrichtung der Fig. 1 unten/hin-ten lag; und

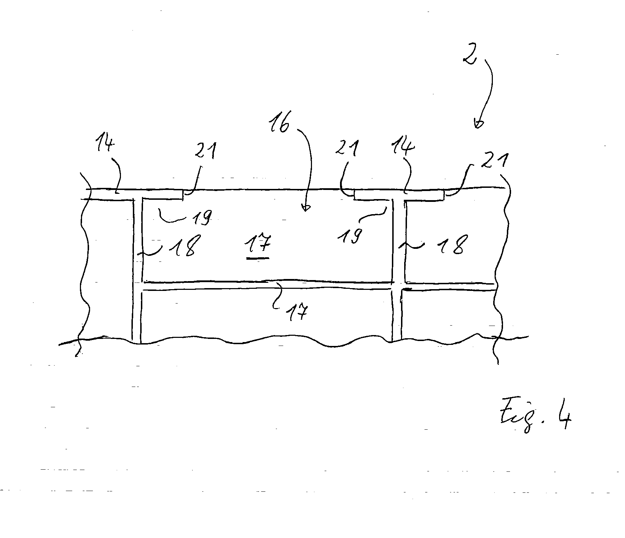

- Fig. 4: eine rückseitige Ausnehmung einer Betonierungs-Schaltafel, in einem Schnitt längs III-III in Fig. 1, der einen Ausschnitt zeigt.

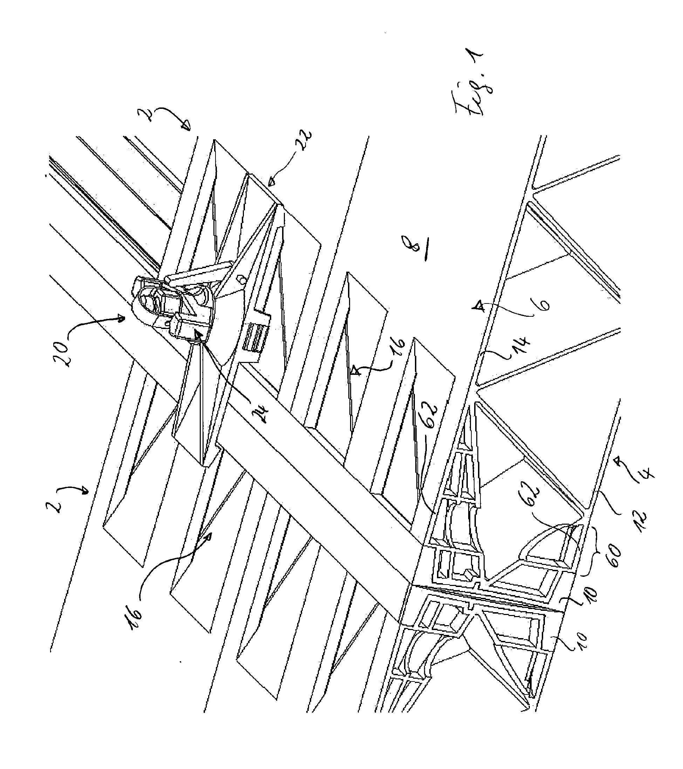

In Fig. 1 sind zwei aneinander anschließende Betonierungs-Schaltafeln 2 ―im Folgenden nur noch kurz "Schaltafel" - im Ausschnitt gezeichnet. Die Schaltafeln 2 haben, unten in Fig. 1, jeweils eine Nutzseite 4, wobei die Nutzseiten-Oberflächen der zwei Schaltafeln 2 miteinander fluchten. Durch die Nutzseiten-Oberflächen dieser zwei Schaltafeln 2 und weiterer Schaltafeln 2 wird die Gesamtschalung für z. B. eine zu erzeugende Betonwand geschaffen.

Die Blickrichtung der Fig. 1 ist schräg auf die Rückseiten 6 der zwei Schaltafeln 2 gerichtet. Jede Rückseite 6 hat eine ebene Rückseiten-Oberfläche 8.

Die in Fig. 1 linke Schaltafel 4 hat einen in Fig. 1 rechten Randbereich, der sich von links-unten nach rechts-oben in Fig. 1 erstreckt. Die in Fig. 1 rechte Schaltafel 4 hat einen in Fig. 1 linken Randbereich, der sich ebenfalls von links-unten nach rechts-oben in Fig. 1 erstreckt. Jede der zwei Schaltafeln 2 hat in dem genannten Randbereich einen U-förmigen Randträger 10 aus extrudiertem Aluminium. Was man in Fig. 1 sonst noch von der betreffenden Schaltafel 2 sieht, besteht aus faserverstärktem Kunststoff.

Jede der zwei Schaltafeln 2 besitzt eine erste Wand 12 an der Nutzseite 4 und eine zweite Wand 14 an der Rückseite 6.

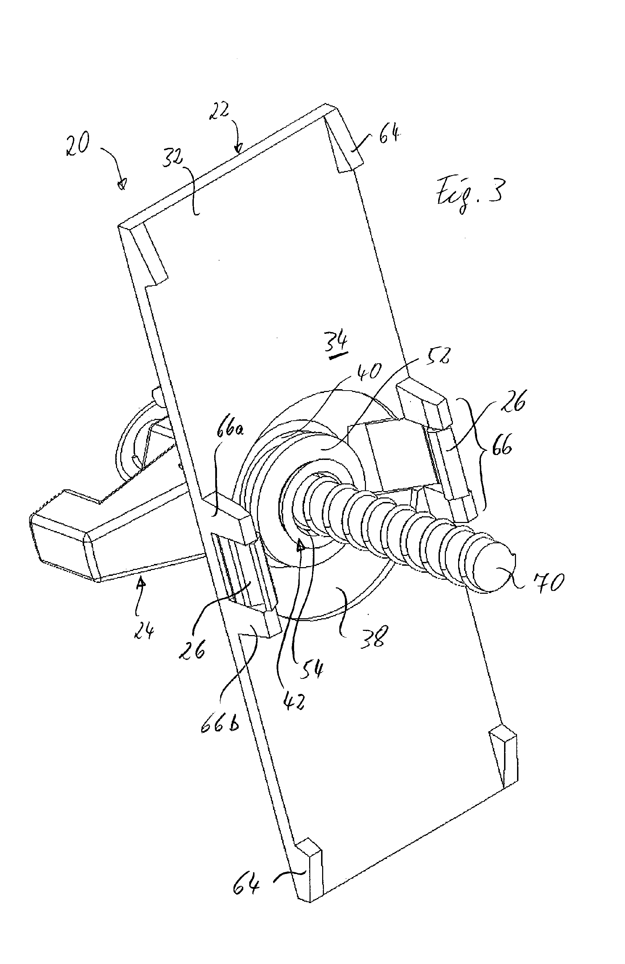

An der Rückseite 6 besitzt jede der zwei Schaltafeln 2, anschließend an den genannten Randbereich, Ausnehmungen 16, von denen in Fig. 1 zwei Ausnehmungen 16 pro Schaltafel 2 zu sehen sind. In dem Schnitt der Fig. 3, dessen Schnittrichtung parallel zu den Randträgern 10 verläuft, ist die betreffende Ausnehmung 16 durch eine Bodenwand 17 und zwei Seitenwände 18 begrenzt. Wo die Seitenwände 18 in die zweite Wand 14 übergehen, ist bei jeder Seitenwand 18 die zweite Wand 14 ein Stück weit über die Ausnehmung 16 ragend ausgebildet. Auf diese Weise sind beidseits je eine Hinterschneidung 19 und zwei Ausnehmungs-Ränder 21 der zweiten Wand gebildet. Die Bodenwand 17 verläuft schräg (siehe Fig. 1).

Das gezeichnete Verankerungselement 20 hat als Hauptbestandteile ein Basisteil 22, ein Schraubteil 24, zwei Halterungselemente 26, ein Sperrelement 28, und ein Begrenzungselement 30.

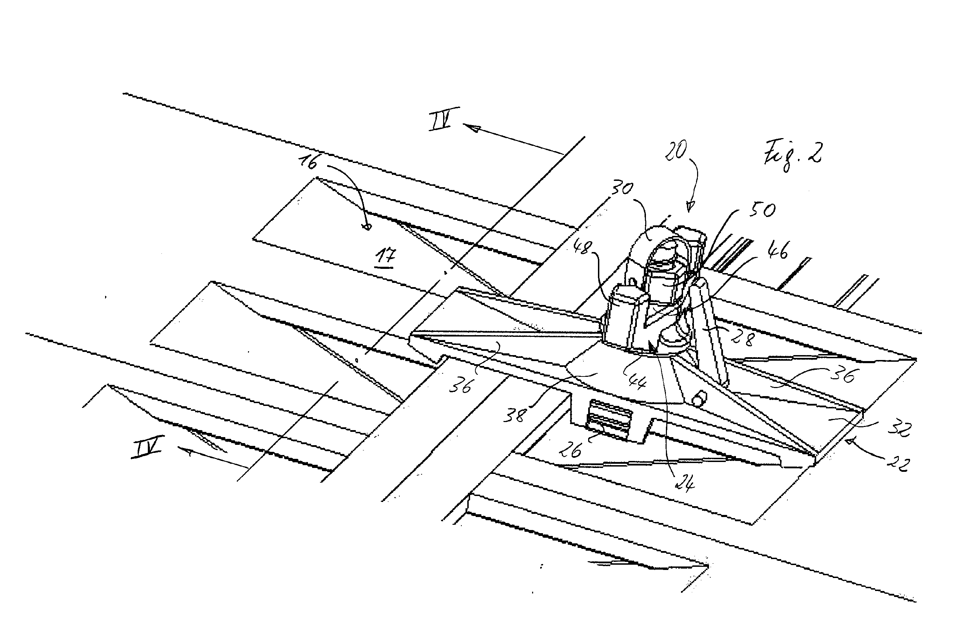

Das Basisteil 22 hat einen plattenartigen Bereich 32 mit einer im Wesentlichen rechteckigen Anlagefläche 34 (mit zwei Querseiten und zwei Längsseiten, die je etwas mehr als doppelt so lang wie eine Querseite sind), die in Fig. 1 nach unten weist und in Fig. 2 auf den Betrachter zu weist. An der in Fig. 1 oben liegenden Oberseite des Basisteils 22 sind zwei diagonal verlaufende, fortstehende Wände 36 vorhanden, die kurz vor ihrem Kreuzungspunkt in einen kegelstumpfförmigen Dom 38 übergehen. Der Dom 38 hat eine kreisrunde Öffnung 40, von der man in Fig. 2 einen kleinen Teil des Randes sieht. Die Höhe der Wände 36 nimmt von den Wandenden an den Ecken des plattenförmigen Bereichs 32, wo die Höhe praktisch Null ist, zu dem Dom 38 hin zu, so dass die Wände 36 in Seitenansicht im Wesentlichen dreieckig sind.

Das Schraubteil 24 setzt sich im Wesentlichen aus zwei Bereichen zusammen, nämlich einem Flügelmutter-Bereich, der sich in Fig. 1 oberhalb der Oberseite des plattenförmigen Bereichs 32 befindet, und einem Fortsatz 42 kreisrunden Querschnitts, der nach unten durch die Öffnung 40 in der oberen Abschlusswand des Doms 38 ragt. Der Flügelmutter-Bereich hat anschließend nach oben an den Dom 38 einen kreisrunden Querschnitt derartiger Größe, dass in Relation zu dem Fortsatz 42 eine Schulter 44 gebildet ist. Nach oben anschließend in Fig. 1 kommen zwei "Flügel" 46, die - diametral zueinander - radial ein Stück weit vom Zentrum des Schraubteils 24 nach außen ragen und dort jeweils in einer axial dickeren Verdickung 48 enden. An der in Fig. 1 oberen Oberseite des Flügelmutter-Bereichs sitzt zentral eine Mutter 50 mit innerem Gewinde und äußerem Sechskant. Die Mutter 50 ist einstückig mit dem restlichen Schraubteil 24, könnte aber z. B. auch oberseitig an den Flügeln 46 angeschweißt sein. Im in Fig. 1 unteren Endbereich des Fortsatzes 42 (das ist in Fig. 2 der auf den Betrachter zu weisende Endbereich des Fortsatzes 42) ist auf dem Fortsatz 42 eine Scheibe 52 mit gegenüber dem Fortsatz 42 größerem Durchmesser angebracht, und zwar in einer Weise, dass sie in Fig. 2 in Richtung auf den Betrachter zu nicht von dem Fortsatz 42 gezogen werden kann. Dies kann z. B. durch einen vor der Scheibe 52 sitzenden, in Fig. 2 nicht eingezeichneten Sprengring erfolgen.

Somit ist das Schraubteil 20 unverlierbar an dem Basisteil 22 gehaltert, kann sich aber in der Öffnung 40 um seine eigene Längsachse drehen.

Die zwei Halterungselemente 26 sind gleich ausgebildet und in Form von federnden Metallstreifen verwirklicht, die jeweils an dem Basisteil 22 angenietet sind, und zwar innenseitig am Dom 38.

Das Sperrelement 28 ist als einarmiger Hebel ausgebildet, der schwenkbar in einem Zwischenraum zwischen zwei der Wände 36 in diesen zwei Wänden 36 schwenkbar gelagert ist. In seiner Freigabestellung liegt der Hebel 28 nahezu flach auf der in Fig. 1 oberen Oberseite des plattenförmigen Bereichs 32. In seiner Sperrstellung, die in Fig. 1 gezeichnet ist, ragt der Hebel 28 nach schräg oben von der Oberseite des plattenförmigen Bereichs 32 und weist mit seiner Längsrichtung mehr zur Zentralachse des Schraubteils 24 hin. Bei dieser Sperrstellung des Hebels 28 kann sich das Schraubteil 24 maximal um einen begrenzten Winkel relativ zu dem Basisteil 22 drehen, nämlich nur so weit, bis einer der Flügel 46 gegen den Hebel 28 anschlägt. Die Schwenklagerung des Hebels 28 ist absichtlich mit Reibung derartiger Größe ausgeführt, dass der Hebel 28 sich nicht ohne Einwirkung einer Bedienungsperson verschwenken kann.

Das Begrenzungselement 30 hat im Wesentlichen die Form eines halbkreisförmigen Bügels, der schwenkbar an dem restlichen Schraubteil 24 angebracht ist, und zwar derart, dass er in seiner in Fig. 1 gezeichneten Begrenzungsstellung das in Fig. 1 obere Ende des Zentralkanals 54 des Schraubteils 24 überdeckt. Der Zentralkanal 54 des Basisteils 22 erstreckt sich von der Oberseite der Mutter 50 durch die Mutter 50, dann durch den Flügelmutter-Bereich, und dann durch den gesamten Fortsatz 42. Die Schwenklagerung des Bügels 30 ist absichtlich mit Reibung derartiger Größe ausgeführt, dass der Bügel 30 sich nicht ohne Einwirkung einer Bedienungsperson verschwenken kann.

Jede der zwei Schaltafeln 2 hat dort, wo das Verankerungselement 20 angesetzt werden soll, einen von der Nutzseite 4 bis zur Rückseite 6 durchgehenden Kanal 60. In Fig. 1 ist dieser Kanal von dem Verankerungselement 20 überdeckt. Unten in Fig. 1 sieht man jedoch Öffnungen in Schrägwänden der betreffenden Schaltafel 2, welche Schrägwände sich zwischen der ersten Wand 12 und der zweiten Wand 14 befinden, gleichsam als Vorstufe für einen derartigen Kanal 60. Wenn man an einer bestimmten Stelle einen komplett funktionsfähigen Kanal 60 haben möchte, trennt man an der betreffenden Stelle kleine Teilbereiche 62 der ersten Wand 12 und der zweiten Wand 14 heraus, und dann ist auf Basis der Fig. 1 sofort die Bildung eines Kanals 60 ersichtlich. Auf diese Weise erzeugt befindet sich an der Stelle, wo der Zentralkanal 54 des Verankerungselements 20 sowie dessen Fortsetzung nach unten in Fig. 1 positioniert sind, ein Kanal 60. Es ist möglich, an der Stelle, wo man einen Kanal 60 haben möchte, ein rohrartiges Einschubteil in die betreffende Schaltafel 2 einzubringen.

In Fig. 2 sieht man, dass der plattenartige Bereich 32 auf der in Fig. 2 dem Betrachter zugewandten Seite an seinen vier Eckbereichen jeweils einen Vorsprung 64 besitzt, der von der Ablagefläche 34 vorragt. Bei jedem Vorsprung 64 nimmt die Höhe des Vorragens ausgehend von Null an der Rechteck-Querseite kontinuierlich zu, so dass der Vorsprung 64 in Seitenansicht dreieckig ist. Außerdem sieht man jeweils einen in Längsrichtung der rechteckigen Anlagefläche 34 deutlich längeren, von der Anlagefläche 34 vorragenden Vorsprung 66 im mittleren Bereich der Länge des plattenartigen Bereichs 32, und zwar an jedem Längsrand einen Vorsprung 66. Die Vorsprünge 64 und 66 sind so positioniert, dass die zwei mittleren Vorsprünge 66, jeweils mit einem seitlichen Rand, gegen das Stirnende eines Schenkels eines der zwei Randträger 10 anliegen, wohingegen die zwei Vorsprünge 64, die sich anschließend an eine Querseite des plattenförmigen Bereichs 32 befinden, jeweils mit einem seitlichen Rand an der Stirnseite eines Schenkels des anderen der zwei Randträger 10 anliegen. Somit ist das Basisteil 22 durch die zwei Randträger 10 so festgelegt, dass es sich nicht in seiner Längsrichtung relativ zu den Schaltafeln 2 bewegen kann.

Entlang eines ersten Längsrands des plattenförmigen Bereichs 32 befinden sich, in dieser Reihenfolge, ein Eckbereichs-Vorsprung 64, mittlerer Vorsprung 66, und ein Eckbereichs-Vorsprung 64. Das gleiche gilt für den zweiten Längsrand des plattenförmigen Bereichs 32. Hinsichtlich der Quererstreckung des plattenförmigen Bereichs 32 haben die Vorsprünge 64, 66, 64 an dem ersten Längsrand und die Vorsprünge 64, 66, 64 an dem zweiten Längsrand einen lichten Abstand voneinander, welcher der Distanz zwischen zwei der weiter oben beschriebenen Ränder 21 der zweiten Wand 14 (Fig. 3) entspricht. Der erste Rand 21 dieses Paars von Rändern 21 weist zu einer der Ausnehmungen 16 hin, wohingegen der zweite Rand 21 in entgegengesetzter Richtung zu einer benachbarten Ausnehmung 16 hin weist. Der zwischen den zwei Rändern 21 befindliche, streifenförmige Bereich der zweiten Wand 14 ist auf einer Seite von einem seitlichen Rand des einen mittleren Vorsprungs 66 sowie einem seitlichen Rand eines Eckbereich-Vorsprungs 64 gefasst, und auf einer anderen Seite von dem seitlichen Rand des anderen mittleren Vorsprungs 66 und dem seitlichen Rand eines anderen Eckbereich-Vorsprungs 64 gefasst. Infolgedessen kann sich das Basisteil 22 nicht in seiner Querrichtung relativ zu den Schaltafeln 2 verlagern. Das Basisteil 22 ist somit auch insgesamt gegen Verdrehen relativ zu den Schaltafeln gesichert.

Man sieht, dass das Basisteil 22 insgesamt spiegelsymmetrisch sowohl zu einer Ebene, die sich durch die Achse des Zentralkanals 54 und parallel zu den Randträgern 10 erstreckt, als auch zu einer Ebene, die sich durch die Achse des Zentralkanals und rechtwinklig zu den Randträgern 10 erstreckt, ausgebildet ist. Für die Positionierung des Basisteils 22, gesichert gegen Verlagerung in Erstreckungsrichtung der Randträger 10, dienen Ränder der Vorsprünge 64 bzw. 66, die in Richtung der Längserstreckung der Randträger 10 weisen. Für die Positionierung des Basisteils 22, gesichert gegen Verlagerung quer zur Längserstreckung der Randträger 10, dienen Ränder der Vorsprünge 64 bzw. 66, die in Richtung der Längserstreckung des plattenförmigen Bereichs 32 weisen. Die Richtung der Längserstreckung des plattenförmigen Bereichs 32 liegt rechtwinklig zur Erstreckungsrichtung der Randträger 10.

Bisher ist von zwei mittleren Vorsprüngen 66 gesprochen worden. Tatsächlich ist jeder mittlere Vorsprung 66 aus einem in Längsrichtung des plattenartigen Bereichs 32 beabstandeten Paar von Vorsprüngen 66a und 66b aufgebaut. Im Zwischenraum zwischen diesen Vorsprungsteilen 66a und 66b erstreckt sich jeweils eine Teillänge einer Halterungsklammer 26. Anhand von Fig. 1 kann man gut nachvollziehen, dass die jeweilige Halterungsklammer 26 in eine der weiter oben beschriebenen Hinterschneidungen 19 an einer der Ausnehmungen 16 eingeschnappt ist.

Durch die beschriebenen vier Vorsprünge 64, die beschriebenen zwei Vorsprungsteile 66a, die zwei Vorsprungsteile 66b sowie die zwei Halterungsklammern 26 ist der Basisteil 22 positionsgenau derart an der Rückseite 6 der betreffenden Schaltafel(n) 2 gehaltert, dass sich der Zentralkanal 54 des Schraubteils 24 fluchtend mit dem Kanal 60 in der Schaltafel 2 befindet.

Zum Anbringen des Verankerungselements 2 an der Rückseite 6 einer Schaltafel 2 drückt eine Person einfach das Verankerungselement 2 mit seiner Anlagefläche 34 voran gegen den Bereich der zweiten Wand 14, der sich zwischen zwei benachbarten Ausnehmungen 18 befindet, bis die federnden Halterungsklammern 26 in der beschriebenen Weise hinter die Gegenbereiche an der zweiten Wand 14 eingeschnappt sind. Der Hebel 28 wird in seine Sperrstellung gebracht, und der Bügel 30 wird in seine Begrenzungsstellung gebracht. Wenn weitere Schaltafeln 2, mit deren Nutzseiten 4 gegenüberliegend den Nutzseiten 4 der bisher betrachteten Schaltafeln 2, und zwar in einem Abstand, welcher der Dicke der zu erzeugenden Betonwand entspricht, gerichtet sind, wird an einer betrachteten Spannstabstelle eine Abstandshülse zwischen die gegenüberliegenden Oberflächen der Schaltafeln 2 gesetzt. Von der Rückseite 6 der korrespondierenden, mit Abstand entsprechend der Betonwanddicke aufgestellten Schaltafel 2 (die man in Fig. 1 nicht sieht, aber sich in Fortsetzung der Fig. 1 nach unten spiegelbildlich zu der in Fig. 1 linken Schaltafel 2 vorstellen kann) aus wird ein Spannstab 70 (von dem man in Fig. 2 nur einen abgeschnittenen Teilabschnitt sieht) durch den betreffenden Kanal 60 der in Fig. 1 nicht sichtbaren Schaltafel 2, durch die Abstandshülse, durch den Kanal 60 der in Fig. 1 linken Schaltafel 2 in den Zentralkanal 54 des Schraubteils 24 des Verankerungselements 20 gefädelt. Der Spannstab 70 wird in das Gewinde in der Mutter 50 des Schraubteils 24 so weit eingeschraubt, bis sein in Fig. 1 sichtbares Ende gegen den Bügel 30 anstößt. Dann wird an der Rückseite der in Fig. 1 nicht sichtbaren Schaltafel 2 ein (zweites) Verankerungselement 20 aufgesetzt, welches dem bisher beschriebenen (ersten) Verankerungselement gleicht. Bei Anbringung des zweiten Verankerungselements 20 wird dieses mit seinem Zentralkanal 54 auf den auf der Rückseite der nicht sichtbaren Schaltafel 2 herausstehenden Spannstabs 70 aufgefädelt. Der Hebel 28 des zweiten Verankerungselements 20 befindet sich in seiner Freigabestellung, und das Begrenzungselement 30 des zweiten Verankerungselements 20 befindet sich in seiner Freigabestellung. Nun wird das Schraubteil 24 gedreht und dadurch auf den Spannstab 70 aufgeschraubt, und zwar so lange, bis die betreffenden zwei Schaltafeln 2 an dieser Stelle auf den durch die Abstandshülse vorgegebenen Abstand zusammengezogen sind.

Zum Ausschalen der erzeugten Betonwand werden auf beiden Seiten der Betonwand alle Schraubteile 24 - selbstverständlich bei in Freigabestellung befindlichen Hebeln 28 - zurückgeschraubt, bis man pro Zusammenspannstelle wieder zwei Verankerungselemente 20 und einen Spannstab 70 zurückgewonnen hat.

Das beschriebene Ausführungsbeispiel war ein Verankerungselement 20, welches so aufgebaut ist, dass es sowohl mit der in Fig. 1 linken Schaltafel 2 als auch mit der in Fig. 1 rechten Schaltafel 2, und zwar dort mit einem Teilbereich der Länge des dortigen Randträgers 10, zusammenwirkt. Es wird jedoch betont, dass die Erfindung nicht auf Verankerungselemente beschränkt ist, die bei ihrem Einsatz zugleich rückseitig an zwei Schaltafeln 2 zur Anlage kommen. Zum Bereich der Erfindung gehören auch Verankerungselemente, die beim Einsatz nur rückseitig an einer einzigen Schaltafel 2 zur Anlage kommen. Als ein Beispiel kann man sich vorstellen, dass der plattenförmige Bereich 32 ein Stück länger ist als bei dem gezeichneten Ausführungsbeispiel und dass man den plattenförmigen Bereich 32 parallel zu einem Randträger 10 verlaufend positioniert. Der plattenartige Bereich 32 könnte dann die zwei benachbarten Ausnehmungen 16 überspannen und entweder dicht neben dem dortigen Randträger 10 oder auch in geeignetem Abstand von diesem Randträger 10 positioniert sein.

## Patentansprüche

1. Verankerungselement, das für ein Zusammenwirken mit einer Betonierungs-Schaltafel und einem Spannstab zum Zusammenhalten von zwei beabstandeten Betonierungs-Schaltafeln geeignet ist,
**dadurch gekennzeichnet,**
**dass** das Verankerungselement ein Basisteil und ein an dem Basisteil rotierbar gehaltertes Schraubteil aufweist;
**dass** das Basisteil einen plattenartigen Bereich mit einer Anlagefläche zum Anlegen an die Rückseite(n) einer Betonierungs-Schaltafel oder mehrerer benachbarter Betonierungs-Schaltafeln besitzt;
**dass** das Basisteil mindestens ein Halterungselement besitzt, mit dessen Hilfe das Verankerungselement rückseitig an einer Betonierungs-Schaltafel gehaltert werden kann;
**dass** das Schraubteil einen Zentralkanal zur Aufnahme einer Teillänge des betreffenden Spannstabs aufweist und der Zentralkanal mindestens auf einem Teil seiner Länge gewindeartig für einen Gewindeeingriff mit dem Spannstab ausgebildet ist;
und **dass** an dem Basisteil ein Sperrelement angeordnet ist, welches zwischen einer Sperrstellung, bei der das Schraubteil mindestens in einer Rotationsrichtung in seiner Rotationsbewegung relativ zu dem Basisteil begrenzt ist, und einer Freigabestellung bewegbar ist, bei der das Schraubteil für seine Rotationsbewegung relativ zu dem Basisteil frei ist.

2. Verankerungselement nach Anspruch 1, **dadurch gekennzeichnet, dass** das Schraubteil eine Flügelmutter ist.

3. Verankerungselement nach Anspruch 1 oder 2,
**dadurch gekennzeichnet, dass** das Basisteil mindestens einen gegenüber der Anlagefläche vorstehenden Vorsprung besitzt, der derart positioniert und ausgebildet ist, dass er im Schaltafel-Anlagezustand des Verankerungselements an der Betonierungs-Schaltafel bzw. den benachbarten Betonierungs-Schaltafeln dazu beiträgt, dass das Verankerungselement eine definierte Positionierung an der Rückseite der Betonierungs-Schaltafel bzw. der benachbarten Betonierungs-Schaltafeln einnimmt.

4. Verankerungselement nach Anspruch 3,
**dadurch gekennzeichnet, dass** mindestens vier vorstehend Vorsprünge vorhanden sind, die im Wesentlichen entsprechend den Eckpunkten eines Rechtecks positioniert sind.

5. Verankerungselement nach einem der Ansprüche 1 bis 4,
**dadurch gekennzeichnet, dass** als das mindestens eine Halterungselement entweder eine federnde Klammer oder ein Paar gegenüberliegender, federnder Klammern vorhanden ist bzw. sind, das bzw. die derart positioniert ist bzw. sind, dass sie für den gehalterten Zustand des Verankerungselements hinter einem Gegenbereich bzw. hinter Gegenbereichen an der betreffenden Betonierungs-Schaltafel einschnappen kann bzw. können.

6. Verankerungselement nach einem der Ansprüche 1 bis 5,
**dadurch gekennzeichnet, dass** das Sperrelement ein relativ zu dem Basisteil schwenkbar gelagerter Hebel mit einem Sperrbereich ist, gegen den in der Sperrstellung des Hebels das Schraubteil anschlägt.

7. Verankerungselement nach einem der Ansprüche 1 bis 6,
**dadurch gekennzeichnet, dass** an dem Verankerungselement ein Begrenzungselement vorhanden ist, welches zwischen einer Begrenzungsstellung, bei der ein Spannstab maximal für eine festgelegte Schraubbewegungsstrecke mit dem Schraubteil verschraubt werden kann, und einer Freigabestellung bewegbar ist, bei der der Spannstab für eine unbegrenzte Schraubbewegungsstrecke relativ zu dem Schraubteil frei ist.

8. Verankerungselement nach Anspruch 7,
**dadurch gekennzeichnet, dass** das Begrenzungselement einen Begrenzungsbereich aufweist, der in der Begrenzungsstellung des Begrenzungselements entweder den Zentralkanal des Schraubteils auf einer Teillänge blockiert oder über dem Ende, welches von der Anlagefläche des Verankerungselements abgewandt ist, des Zentralkanals des Schraubteils eine Sperre bildet.

9. Verankerungselement nach Anspruch 8,
**dadurch gekennzeichnet, dass** das Begrenzungselement ein schwenkbar an dem Schraubteil gelagerter Bügel ist.
